# EUROPEAN PATENT APPLICATION

(11) **EP 2 645 234 A1**
(43) Date of publication of application: **02.10.2013**
(21) Application number: 13157602.7
(22) Date of filing: 04.03.2013
(51) Int. Cl.: G06F 3/147

(54) **Electronic device**

(30) Priority: 27.03.2012 US 201261615887 P; 26.09.2012 TW 101135365
(71) Applicant: ASUSTeK Computer Inc., Taipei City 112 (TW)
(72) Inventor: Lee, Tung-Tsan, 112 Taipei City (TW); Yang, Min-Chieh, 112 Taipei City (TW); Chiu, Ying-Hao, 112 Taipei City (TW)
(74) Representative: Becker Kurig Straus

(57) **Abstract**

An electronic device includes a computing module and a display module. The computing module executes a first operating system. When the display module is in a connection area with the computing module, the display module displays an image of the first operating system. When the display module is outside the connection area, the display module executes a second operating system, and displays an image of the second operating system.

## Description

### CROSS-REFERENCE TO RELATED APPLICATION

This application claims the priority benefit of Taiwan application serial No. 61/615887, filed on March 27, 2012. The entirety of the above-mentioned patent application is hereby incorporated by reference herein and made a part of specification.

### BACKGROUND OF THE INVENTION

### Field of the Invention

The invention relates to an electronic device and, more particularly, to an electronic device including a display module.

### Description of the Related Art

With information explosion, electronic products become necessary in daily life. As electric science technology develops, electronic devices have more innovations to be user friendly and have more functions.

In the development history of personal computers (PC), a desktop PC is produced first. However, the desktop PC is heavy and not portable. Thus, a notebook PC and a tablet PC which are portable are developed.

The tablet computer is convenient in using. The user can put the tablet computer on a desk or legs, and operate it with fingers or a stylus instead of a keyboard or a mouse.

Although the tablet computer is light and easy to operate, it is poor in data processing due to a size limitation.

### BRIEF SUMMARY OF THE INVENTION

An electronic device includes a computing module and a display module. The computing module executes a first operating system. The display module is detachably connected to the computing module. When the display module is in a connection area to connect with the computing module, the display module displays an image of the first operating system, and when the display module is outside the connection area, the display module executes a second operating system and displays an image of the second operating system.

As stated above, the electronic device drives the computing module to process data, and makes the display module to assist the computing module, so the limitation of processing capability of the display module can be solved under its light and small feature, and improve its convenience greatly.

These and other features, aspects and advantages of the present invention will become better understood with regard to the following description, appended claims, and accompanying drawings.

### BRIEF DESCRIPTION OF THE DRAWINGS

FIG. 1 is a schematic diagram showing an electronic device in a first embodiment; and

FIG. 2 is a schematic diagram showing an electronic device in a second embodiment.

### DETAILED DESCRIPTION OF THE EMBODIMENTS

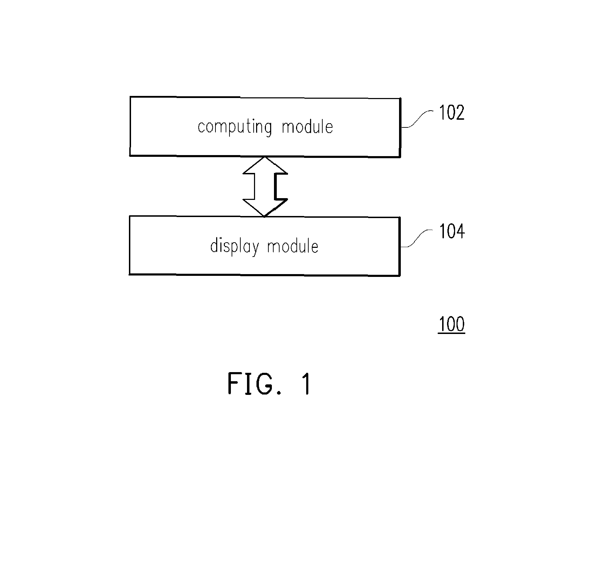

FIG. 1 is a schematic diagram showing an electronic device in a first embodiment. Please refer to FIG. 1, the electronic device 100 includes a computing module 102 and a display module 104. The computing module 102 may be a computer host, and the display module 104 may be a tablet computer or a smart mobile phone, which is not limited herein.

The computing module 102 executes a first operating system, such as Linux or Windows. The display module 104 is detachably connected to the computing module 102, and when the display module 104 is connected to the computing module 102, the electronic device 100 can be regarded as a desktop computer or a notebook computer.

When the display module 104 is detached from the computing module 102 and in a connection area with the computing module 102, the display module 104 continuously receives display data from the computing module 102 to display an image of the first operating system.

The "connection" between the display module 104 and the computing module 102 when they are detached may be achieved via bluetooth, wireless fidelity (Wi-Fi) or worldwide interoperability for microwave access (WiMAX), which is not limited herein.

When the display module 104 is in the connection area with the computing module 102, the display module 104 receives an input from the user and outputs a corresponding control command to the computing module 102 to remotely control the computing module 102.

When the display module 104 is outside the connection area, the display module 104 executes a second operating system and displays an image of the second operating system. The second operating system may be a Symbian operation system or an Android operation system, which is not limited herein..

Moreover, when the display module 104 is outside the connection area with the computing module 102, it can process the data stored in the display module 104. For example, if the display module 104 is in the connection area, the user uses the computing module 102 to edit a document and transmit it to the display module 104 for storing and displaying. If the display module 104 is moved out of the connection area before the document editing is finished, the user can continue editing in the second operating system according the document stored in the display module 104 after the display module 104 is switched to the second operating system.

When the display module 104 is in the connection area, the display module 104 can also be switched to the second operating system according to an input of the user. Additionally, when the display module 104 enters the connection area from the outside, the display module 104 pops up a switch massage to ask the user whether to switch the display module to the first operating system or to keep executing the second operating system.

As stated above, when the display module 104 is in the connection area with the computing module 102, the electronic device 100 processes data via the computing module 102, and the display module 104 executes display functions. Consequently, the limitation of processing capability of the display module 104 can be solved under its light and small feature. When the display module 104 is outside the connection area, the display module 104 is switched to the second operating system, which improves the convenience of the electronic device 100 in usage.

Moreover, the computing module 102 can not only be connected to the display module 104, the computing module 102 but also can be connected to a peripheral display module (not shown) to display the image of the first operating system, which enhances the applicability of the electronic device 100. For example, the display module may be a projector, and in a classroom, a teacher may hold the display module 104 to remotely control the computing module 102 and project teaching contents via the projector.

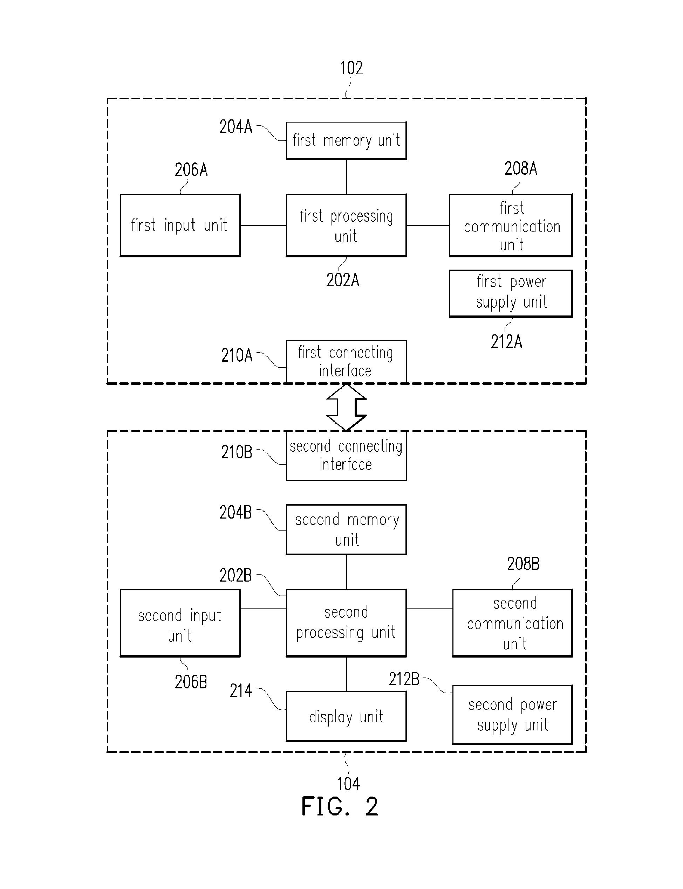

FIG. 2 is a schematic diagram showing an electronic device in a second embodiment. In the embodiment, the computing module 102 includes a first processing unit 202A, a first memory unit 204A, a first input unit 206A, a first communication unit 208A, a first connecting interface 210A and a first power supply unit 212A. The first processing unit 202A is coupled to the first memory unit 204A, the first input unit 206A and the first communication unit 208A, and the first power supply unit 212A is coupled to the first processing unit 202A, the first memory unit 204A, the first input unit 206A and the first communication unit 208A (the coupling connection therebetween is not shown for a concise purpose).

The first memory unit 204A stores the first operating system, and the first processing unit 202A executes the first operating system. The first input unit 206A receives the input signal to control the first processing unit 202A to execute corresponding operations, and the first input unit 206A may be a keyboard, a mouse or a touch control panel. The first communication unit 208A transmits the display data to the display module 104 and receives a control command from the display module 104, and the first processing unit 202A executes corresponding operations according to the control command. The first power supply unit 212A provides power to the first processing unit 202A, the first memory unit 204A, the first input unit 206A and the first communication unit 208A.

The display module 104 includes a second processing unit 202B, a second memory unit 204B, a second input unit 206B, a second communication unit 208B, a second connecting interface 210B, a second power supply unit 212B and a display unit 214. The second processing unit 202B is coupled to the second memory unit 204B, the second input unit 206B, the second communication unit 208B, the second power supply unit 212B and the display unit 214, and the second power supply unit 212B is coupled to the second processing unit 202B, the second memory unit 204B, the second input unit 206B, the second communication unit 208B, the second power supply unit 212B and the display unit 214 (the coupling connection therebetween is not shown for a concise purpose).

The second processing unit 202B executes the second operating system and controls the display unit 214 to display an image according to the display data. The second input unit 206B receives the input signal to control the second processing unit 202B to execute corresponding application programs or output the corresponding control command to the computing module 102, and the second input unit 206B may be a display touch control panel.

The second communication unit 208B further detects whether the connection between the display module 104 and the computing module 102 is normal, and it receives the display data from the computing module 102, and the display unit 214 displays an image according to the display data. The second memory unit 204B stores the second operating system, and temporarily stores data (such as an editing document) received from the computing module in a latest predetermined time.

The second power supply unit 212B provides power to the second processing unit 202B, the second memory unit 204B, the second input unit 206B, the second communication unit 208B and the display unit 214. The second connecting interface 210B is connected to the first connecting interface 210A, so as to electrically connect the display module 104 to the computing module 102. Furthermore, the display module 104 transmits data to the computing module 102 via the first connecting interface 210A and the second connecting interface 210B. The first connecting interface 210A may be fastened to the second connecting interface 210B, which is not limited herein.

The second processing unit 202B detects a connection state between the display module 104 and the computing module 102 according to the second communication unit 208B, and determines whether the display module 104 is in the connection area to connect with the computing module 102.

As stated above, when the display module 104 in the connection area, the second processing unit 202B controls the display unit 214 to display an image of the first operating system according to the display data received by the second communication unit 208B, or controls the second communication unit 208B to transmit the control command to the first communication unit 208A according to an input of the user, and the first processing unit 202A executes corresponding operations according to the control command. The second processing unit 202B further switches the display module 104 to the second operating system according to an input of the user.

When the display module 104 is outside the connection area, the second processing unit 202B executes the second operating system. For example, the second processing unit 202B processes data temporarily stored in the second memory unit 204B and received from the computing module in a latest predetermined time. Moreover, when the display module 104 enters the connection area from the outside, the second processing unit 202B controls the display unit 214 to display a switch massage to ask the user whether to switch the display module 104 to the first operating system or continue executing the second operating system.

In sum, when the display module is in the connection area to connect with the computing module, the computing module executes data processing, and the display module displays an image.

When the display module is outside the connection area, the display module executes the second operating system, and greatly improves the convenience of the electronic device in usage. Furthermore, the computing module may also be connected to another display module to display the image simultaneously, which enhances the applicability of the electronic device.

Although the present invention has been described in considerable detail with reference to certain preferred embodiments thereof, the disclosure is not for limiting the scope. Persons having ordinary skill in the art may make various modifications and changes without departing from the scope. Therefore, the scope of the appended claims should not be limited to the description of the preferred embodiments described above.

## Claims

1. An electronic device (100), comprising:
a computing module (102) executing a first operating system; and
a display module (104) detachably connected to the computing module (102), wherein when the display module (104) is in a connection area to connect with the computing module (102), the display module (104) displays an image of the first operating system, and when the display module (104) is outside the connection area, the display module (104) executes a second operating system and displays an image of the second operating system.

2. The electronic device (100) according to claim 1, wherein when the display module (104) is in the connection area, the display module (104) further receives an input signal and outputs a control command to the computing module (102) to control the computing module (102) to execute a corresponding operation.

3. The electronic device (100) according to claim 1, wherein the display module (104) in the connection area, the display module (104) further receives an input signal to switch to the second operating system.

4. The electronic device (100) according to claim 1, wherein the computing module (102) is further connected to a peripheral display module and transmits display data to the peripheral display module to display an image of the first operating system.

5. The electronic device (100) according to claim 1, wherein the computing module (102) includes:
a first memory unit (204A) storing the first operating system; and
a first input unit (206A) receiving an input signal to control the computing module (102) to execute a corresponding operation.

6. The electronic device (100) according to claim 1, wherein the computing module (102) includes:
a first communication unit (208A) transmitting display data to the display module (104) and receiving a control command from the display module (104), wherein the computing module (102) executes a corresponding operation according to the control command.

7. The electronic device (100) according to claim 1, wherein the computing module (102) includes:
a first connecting interface (210A), wherein the computing module (102) is electrically connected to the display module (104) via the first connecting interface (210A).

8. The electronic device (100) according to claim 1, wherein the display module (104) includes:
a second memory unit (204B) storing the second operating system and data received from the computing module (102) in a latest predetermined time temporarily; and
a second input unit (206B) receiving an input signal to control the display module (104) to execute a corresponding application program or output a corresponding control command to the computing module (102).

9. The electronic device (100) according to claim 8, wherein the second input unit (206B) is a display touch control panel.

10. The electronic device (100) according to claim 8, wherein the display module (104) includes:
a second communication unit (208B) receiving display data from the computing module (102); and
a display unit (214) displaying an image according to the display data.

11. The electronic device (100) according to claim 10, wherein the second communication unit (208B) further detects whether the connection between the display module (104) and the computing module (102) is normal, and the display module (104) determines whether the display module (104) is in the connection area according to a detecting result of the second communication unit (208B).

12. The electronic device (100) according to claim 10, wherein the display module (104) includes:
a second power supply unit (212B) coupled to the second input unit (206B), the second communication unit (208B), the second memory unit (204B) and the display unit (214).

13. The electronic device (100) according to claim 1, wherein the display module (104) includes:
a second connecting interface (210B), wherein the display module (104) is electrically connected to the computing module (102) via the second connecting interface (210B).
